Europäisches Patentamt

European Patent Office

Office européen des brevets

(11) Numéro de publication : **0 060 789**
**B1**

(12) **FASCICULE DE BREVET EUROPÉEN**

(45) Date de publication du fascicule du brevet :
07.08.85

(51) Int. Cl.⁴ : **F 16 K 17/40**

(21) Numéro de dépôt : **82400455.0**

(22) Date de dépôt : **12.03.82**

(54) **Vanne à passage direct en tout ou rien.**

(30) Priorité : **16.03.81 FR 8105197**

(43) Date de publication de la demande :
**22.09.82 Bulletin 82/38**

(45) Mention de la délivrance du brevet :
**07.08.85 Bulletin 85/32**

(84) Etats contractants désignés :
**AT BE CH DE GB IT LI LU NL SE**

(56) Documents cités :
**AU-B-  486 039**
**FR-A- 2 437 553**
**GB-A-  693 636**
**LU-A-   28 628**
**US-A- 4 245 660**

(73) Titulaire : **COMPAGNIE CENTRALE SICLI (Société Anonyme)**
**2/4, rue Blaise Pascal**
**F-93152 Le Blanc-Mesnil (FR)**

(72) Inventeur : **Voisembert, Sylvie**
**18, avenue de la Résistance**
**F-93100 Montreuil (FR)**
Inventeur : **Mercier, Daniel**
**16 bis, Boulevard A. Briand**
**F-93100 Montreuil (FR)**

(74) Mandataire : **Laget, Jean-Loup et al**
**Cabinet Pierre Loyer 18, Rue de Mogador**
**F-75009 Paris (FR)**

## Description

L'invention concerne une vanne à passage direct en tout ou rien, notamment destinée à équiper une installation ou un dispositif d'extinction d'incendie.

Les installations fixes de protection contre l'incendie comportent généralement un réservoir de fluide extincteur sous pression muni d'une vanne dont l'entrée est branchée sur ledit réservoir et la sortie est reliée à un circuit de distribution du fluide extincteur.

La vanne d'une telle installation, qui est fermée à l'état de repos, peut être ouverte par divers moyens de déclenchement qui sont généralement commandés automatiquement par un dispositif de détection.

C'est ainsi qu'il existe un certain nombre de vannes pour ce type d'application ou des applications voisines qui comportent un clapet différentiel. Voir par exemple le FR-A-2 437 553.

Un clapet différentiel présente deux faces de sections différentes soumises toutes les deux à la pression du fluide, la face de plus grande section étant disposée dans une chambre de pression qui communique avec le réservoir par un petit conduit calibré.

Le clapet, ainsi sollicité de manière différente sur ces deux faces opposées, prend une position de repos dans laquelle il obture l'orifice de sortie, tandis qu'un dispositif de perte de charge est prévu pour abaisser brusquement la pression de la chambre de pression et entraîner un mouvement du clapet qui permet de libérer ainsi l'orifice de sortie et obturer le conduit de communication de la chambre de pression.

Tous ces appareils possèdent nécessairement des orifices d'entrée et de sortie non coaxiaux et la plupart du temps avec des axes sensiblement perpendiculaires. Cette particularité présente notamment l'inconvénient d'entraîner des risques de bourrage ou d'encrassement en fonction du fluide extincteur utilisé.

Il est en effet recommandé pour un nombre important de produits d'extinction propulsés par un gaz sous pression, d'avoir un parcours avec un minimum d'obstacles ou de difficultés.

On connaît une vanne à passage direct correspondant au préambule de la revendication (AU-B-486 039), qui décrit un appareil de stockage de produit extincteur sous pression, fermé par un opercule déchirable. Un percuteur creux peut venir déchirer l'opercule. Le percuteur est logé dans l'alésage de sortie et il est propulsé par une cartouche de gaz sous pression ouverte par tout moyen approprié, et notamment pyrotechnique, à la suite de la détection d'un incendie. Cette disposition complique la réalisation de l'appareil : elle exige la présence d'une cartouche de gaz auxiliaire, et elle assure un mouvement du percuteur vers l'opercule, opposé à la pression régnant dans le réservoir.

Le but de l'invention telle qu'elle est caractérisée dans la revendication 1, est de proposer une vanne à passage direct, dans laquelle la pression régnant dans le réservoir est utilisée directement pour déplacer le percuteur vers l'opercule déchirable, dans le sens d'écoulement du fluide extincteur.

Des modes particuliers de réalisation de l'invention apparaissent dans les revendications dépendantes.

Une vanne selon l'invention peut avoir de multiples applications. Dans une installation fixe de protection contre l'incendie, son orifice d'entrée est alors branché sur un réservoir de fluide extincteur sous pression et son orifice de sortie sur un circuit de distribution, tandis que le dispositif de déclenchement est commandé par un dispositif de détection d'incendie.

Toutefois, il est aussi possible de disposer cette vanne sur un extincteur mobile à déclenchement manuel, par exemple par traction, et dont la sortie est éventuellement pourvue d'un distributeur à débit variable.

Elle peut également équiper un réservoir de gaz sous pression destiné à d'autres fins, comme le gonflage par exemple.

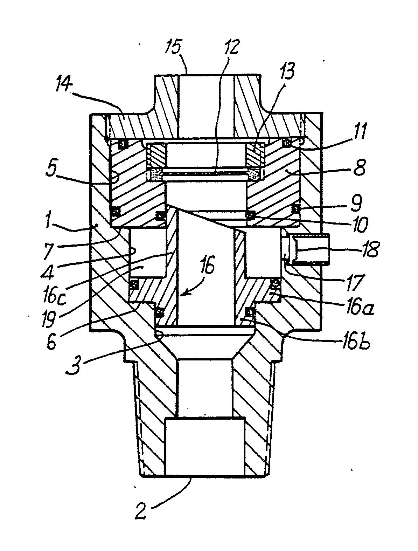

L'invention sera mieux comprise à la lecture de la description qui va suivre et qui se réfère à la figure unique annexée, qui montre un mode préféré de réalisation selon l'invention, dans sa position fermée (représenté en coupe axiale).

La vanne représentée sur le dessin comporte un corps 1 muni d'un orifice d'entrée 2 et de trois alésages cylindriques principaux et successifs 3, 4 et 5 de diamètres respectivement croissants à partir dudit orifice.

Les transitions de ces trois alésages successifs forment deux épaulements intérieurs respectivement 6 et 7.

Dans l'alésage 5 et sur l'épaulement 7 est disposée une bague 8 munie de joints d'étanchéité 9, 10 et 11 respectivement latéral, intérieur et de dessus. L'ajour central de la bague 8 est obturé par un opercule 12 destructible. Ce dernier est fixé de manière étanche dans la bague 8 au moyen, dans cet exemple, de l'anneau 13 vissé dans la bague et qui serre la périphérie de l'opercule par l'intermédiaire de joints d'étanchéité.

Dans l'alésage 5 et au-dessus de la bague, est vissée une pièce annulaire 14 destinée à fixer ladite bague en constituant un orifice de sortie 15.

Dans les alésages 3 et 4, est monté, de manière coulissante, un percuteur tubulaire 16.

Le percuteur 16, comme le montre la figure, est d'une seule pièce et présente un collet 16a qui coulisse de manière étanche dans l'alésage 4. Dans la position de repos montrée, le collet 16a repose par sa face amont sur l'épaulement intérieur 6 du corps 1. De part et d'autre du collet 16a, ledit percuteur comporte respectivement une partie tubulaire amont 16b qui peut coulisser de manière étanche dans l'alésage 3, et une partie tubulaire aval 16c dont l'extrémité est biseautée.

Le biseau d'extrémité de la partie 16c est tel que sa région la plus rapprochée de l'opercule 12 s'applique contre la paroi intérieure de la bague 8 tandis que sa partie la plus éloignée ménage un passage de petite section pour le fluide entre elle-même et ladite bague 8.

Il est clair, comme le montre la figure, que la partie tubulaire 16c présente un diamètre extérieur pratiquement égal au diamètre intérieur de la bague 8 et que sa pointe dépasse le joint 10 de la bague 8.

Il est important de noter que la section droite de la partie tubulaire 16b est légèrement supérieure à la section droite de la partie tubulaire 16c, l'alésage 3 du corps 1 étant à cet effet plus grand que l'ajour central de la bague 8.

La bague 8, la partie tubulaire 16c et le collet 16a forment une chambre annulaire à volume variable référencée 19.

Le corps 1 est pourvu d'un orifice latéral 17 qui, dans la position montrée, débouche dans la chambre annulaire 19 et qui s'ouvre vers l'extérieur ou du moins dans un espace basse-pression.

L'orifice 17 est obturé par un deuxième opercule 18 destructible. La section de l'orifice 17 est supérieure à la section du passage ménagé entre l'extrémité de la partie 16c du percuteur et la bague 8.

Cette vanne est en outre munie d'un dispositif de déclenchement (non représenté) qui peut être électrique, pyrotechnique, mécanique, pneumatique, etc., destiné à détruire ou à déchirer l'opercule 18.

Le dispositif de déclenchement est de plus éventuellement commandé par un système de détection d'incendie.

Sans qu'il soit nécessaire de préciser davantage, l'orifice 2 communique directement avec l'alésage 3 par une série d'autres alésages de diamètres divers. En outre, le corps 1 est adapté pour être raccordé du côté de l'orifice 2 à un réservoir ou circuit sous pression, par exemple au moyen d'un filetage extérieur.

Le fonctionnement de la vanne selon l'invention est maintenant simple à comprendre.

Dans la position de repos représentée, c'est-à-dire en position fermée, le fluide sous pression traverse le percuteur et parvient par le passage dans la chambre annulaire 19.

Etant donné que la section droite de la partie 16b est très inférieure à la section droite du percuteur au niveau du collet 16a, ledit percuteur est sollicité à rester dans la position représentée.

Lorsque l'opercule 18 est détruit ou déchiré par tout moyen approprié, la pression qui règne dans la chambre annulaire 19 subit une chute brutale.

Comme il a été dit ci-avant, la section de l'orifice 17 est plus grande que la section de passage du fluide entre le percuteur et la bague, de telle sorte que l'orifice 17 a un débit de fuite plus grand que le débit de remplissage de la chambre annulaire 19 et le percuteur 16 est poussé vers l'opercule 12 qu'il vient crever par son extrémité biseautée, libérant ainsi le passage du fluide entre les orifices d'entrée et de sortie 2 et 15.

Au début du coulissement du percuteur 16 vers l'opercule 12, la force de poussée est due à la différence des sections droites des parties 16b et 16c, le collet 16a étant pratiquement soumis à la pression atmosphérique. L'extrémité de la partie 16c ferme rapidement l'accès du fluide à la chambre annulaire 19, grâce au joint 10 de la bague 8.

En outre, après un parcours égal à la longueur de la partie tubulaire 16b, la pression s'exerce dans l'alésage 4 sur toute la section du percuteur au niveau de son collet 16a et ledit percuteur subit alors une accélération qui augmente son action et diminue sa durée de réaction, le percuteur venant en fin de course par son collet 16a en butée contre la bague 8.

La vanne qui vient d'être décrite est aisément remise en état après un fonctionnement, l'opercule 12 étant facile d'accès.

De très nombreuses modifications ou variantes peuvent être apportées sans sortir du cadre de l'invention.

C'est ainsi, notamment, que le percuteur peut avoir une forme différente, avec par exemple une partie 16c non biseautée.

En outre, l'opercule 18 peut être remplacé, par exemple, par un circuit soumis au fluide sous pression et pourvu d'ampoules de détection à bas point d'ébullition.

## Revendications

1. Vanne à passage direct en tout ou rien, présentant un orifice d'entrée (2) relié à un circuit ou réservoir de fluide sous pression, l'orifice d'entrée (2) et un orifice de sortie (15) étant dans le même axe, un des deux orifices étant obturé par un opercule déchirable (12) ; et un percuteur creux (16) coulissant de manière étanche dans le corps (1) de vanne entre une position de repos et une position d'ouverture de la vanne définies respectivement par un épaulement amont (6) et un épaulement aval solidaires du corps (1) de vanne ; le percuteur (16) présentant une partie tubulaire amont (16b), un collet (16a) et une partie tubulaire aval (16c), une desdites parties (16b, 16c) étant biseautée à son extrémité pour, d'une part, percer l'opercule déchirable (12) et, d'autre part, en position de repos, former un petit passage de fluide au droit d'un des épaulements, caractérisée en ce que l'opercule déchirable (12) obture l'orifice de sortie (15) et que la partie tubulaire aval (16c) du percuteur (16) est biseautée à son extrémité ; en ce que la partie tubulaire amont (16b) du percuteur possède une section droite supérieure à celle de la partie tubulaire aval (16c) de sorte que le collet (16a) du percuteur (16) constitue un piston différentiel et que la position de repos du percuteur (16) est obtenue par la pression exercée par le fluide ; et en ce qu'un dispositif de déclenchement est prévu pour abaisser brusquement la pression du côté aval du percuteur (16) et provoquer son coulissement vers la position d'ouverture de la vanne en perçant l'opercule (12).

2. Vanne selon la revendication 1, caractérisée en ce que l'épaulement aval est formé par une bague (8) disposée de manière étanche dans le corps de la vanne et dans laquelle est fixé l'opercule déchirable (12), la partie tubulaire aval (16c) du percuteur pouvant coulissant de manière étanche dans ladite bague (8).

3. Vanne selon l'une des revendications 1 et 2, caractérisée en ce que la distance comprise entre l'extrémité du percuteur la plus proche de l'opercule déchirable (12) et ce dernier, est au moins égale à la longueur de la partie amont (16b) du percuteur prise entre son extrémité et le collet (16a), de telle sorte que le mouvement de coulissement du percuteur est accéléré en fin de course avant le perçage de l'opercule, dès que le fluide peut agir sur la face amont du collet (16a).

4. Vanne selon la revendication 1, caractérisée en ce que le dispositif de déclenchement est constitué par un orifice latéral (17) du corps obturé par un autre opercule (18) destructible par tout moyen, mécanique, pneumatique, pyrotechnique ou électrique.

5. Vanne selon l'une des revendications 1 à 4, caractérisée en ce que son orifice d'entrée (2) est branché sur un réservoir de fluide extincteur sous pression et son orifice de sortie (15) sur un circuit de distribution, tandis que le dispositif de déclenchement (18) est commandé par un dispositif de détection d'incendie.

## Claims

1. Direct-throughflow two-position valve having an inlet orifice (2) connected to a pressure-fluid storage container or circuit, the inlet orifice (2) and an outlet orifice (15) being coaxial, one of the two orifices being closed by a rupturable cap (12), and a hollow striker (16) sliding in sealing-tight manner in the housing (1) of the valve between a position of rest and a position in which the valve is open, these positions being defined respectively by an upstream shoulder (6) and a downstream shoulder which are integral with the valve housing (1) ; the striker (16) having an upstream tubular portion (16b), a collar (16a) and a tubular downstream portion (16c), one of the said portions (16b, 16c) being bevelled at its end for on the one hand piercing the rupturable cap (12) and for on the other hand forming a small passage for fluid at the level of one of the shoulders in the position of rest, characterised in that the rupturable cap (12) closes the outlet orifice (15) and that the downstream tubular portion (16c) of the striker (16) is bevelled at its end ; in that the upstream tubular portion (16b) of the striker has a cross-section greater than that of the downstream tubular portion (16c), in such a manner that the collar (16a) of the striker (16) constitutes a differential piston and that the position of rest of the striker (16) is obtained by the pressure exerted by the fluid, and in that a triggering device is provided for suddenly lowering the pressure at the downstream side of the striker (16) and causing it to slide towards the open valve position, piercing the cap (12).

2. Valve according to claim 1, characterised in that the downstream shoulder is formed by a ring (8) arranged in sealing-tight manner in the valve housing, the rupturable cap (12) being secured in the said ring, and the downstream tubular portion (16c) of the striker being slidable in sealing-tight manner in the said ring (8).

3. Valve according to one of claims 1 and 2, characterised in that the distance comprised between the end of the striker nearest to the rupturable cap (12) and the latter is at least equal to the length of the upstream portion (16b) of the striker taken between its end and the collar (16a), in such a manner that the sliding movement of the striker is accelerated at the end of its travel before the piercing of the cap, as soon as the fluid can act on the upstream face of the collar (16a).

4. Valve according to claim 1, characterised in that the triggering device is constituted by a lateral orifice (17) of the housing which orifice is closed by another cap (18) capable of being destroyed by any means, mechanical, pneumatic, pyrotechnic or electrical.

5. Valve according to one of claims 1 to 4, characterised in that its inlet orifice (2) is connected to a storage container of extinguishing fluid under pressure, and its outlet orifice (15) is connected to a dispensing circuit, whereas the triggering device (1à) is controlled by a fire detection system.

## Patentansprüche

1. Schieber zur vollständigen Öffnung oder zum hermetischen Abschluß eines Direktdurchlasses, mit einer an einen Fluidkreislauf oder einen druckbeaufschlagten Fluidspeicher angeschlossenen Einlaßöffnung (2), die koaxial zu einer Auslaßöffnung (15) angeordnet ist, wobei eine der beiden Öffnungen mittels eines berstbaren Deckels (12) geschlossen ist, und einem hohlen Schlagbolzen (16), der in abdichtender Anlage im Schiebergehäuse (1) zwischen einer Ruhestellung und einer Öffnungsstellung des Schiebers gleitet, die jeweils durch einen mit dem Schiebergehäuse (1) fest verbundenen, stromauf angeordneten Vorsprung (6) bzw. stromab angeordneten Vorsprung festgelegt sind, wobei der Schlagbolzen (16) einen hohlzylindrischen stromauf angeordneten Abschnitt (16b), einen Flansch (16a) und einen hohlzylindrischen, stromab angeordneten Abschnitt (16c) aufweist und einer der Abschnitte (16b, 16c) an seiner äußeren Stirnseite abgeschrägt ist, um einerseits den berstbaren Deckel (12) zu durchstoßen und andererseits — in der Ruhestellung — einen kleinen, rechwinklig zu einem der Vorsprünge angeordneten Fluiddurchlaß zu bilden, dadurch gekennzeichnet, daß der berstbare Deckel (12) die Auslaßöffnung (15) schließt und der stromab angeordnete, hohlzylindrische Abschnitt (16c) des Schlagbolzens (16) an seiner äußeren Stirnseite abgeschrägt ist, daß der stromauf angeordnete, hohlzylindrische Abschnitt (16b) des Schlagkolbens einen größeren Querschnitt als der stromab angeordnete, hohlzylindrische Abschnitt (16c) aufweist, so daß der Flansch (16a) des Schlagkolbens (16) einen Differentialkolben bildet und die Ruhestellung des Schlagkolbens (16) durch den von dem Fluid ausgeübten Druck erreicht wird, und daß eine Auslösevorrichtung dazu vorgesehen ist, den Druck stromab des Schlagkolbens (16) plötzlich zu senken und dessen Gleiten in Richtung auf die Öffnungsstellung des Schiebers zu bewirken, wobei er den Deckel (12) durchbohrt.

2. Schieber nach Anspruch 1, dadurch gekennzeichnet, daß der stromab angeornete Vorsprung durch einen Ringkörper (8) gebildet ist, der in abdichtender Anlage in dem Schiebergehäuse sitzt und in dem der berstbare Deckel (12) befestigt ist, wobei der stromab angeordnete, hohlzylindrische Abschnitt (16c) des Schlagkolbens in abdichtender Anlage in dem Ringkörper (8) gleiten kann.

3. Schieber nach einem der Ansprüche 1 und 2, dadurch gekennzeichnet, daß der Abstand zwischen dem am nächsten zum berstbaren Deckel (12) und dem am weitesten davon entfernten Abschnitt der Stirnseite des Schlagkolbens zumindest gleich der Länge des stromauf angeordneten Abschnitts (16b) des Schlagkolbens zwischen seiner Stirnseite und dem Flansch (16a) ist, so daß die Gleitbewegung des Schlagkolbens in der Phase vor dem Durchstoßen des Deckels beschleunigt wird, weil das Fluid auf die stromauf angeordnete Fläche des Flansches (16a) einwirken kann.

4. Schieber nach Anspruch 1, dadurch gekennzeichnet, daß die Auslösevorrichtung durch eine Seitenöffnung (17) des Gehäuses gebildet wird, die durch einen anderen Deckel (18) geschlossen ist, der in irgendeiner Weise, mechanisch, pneumatisch, pyrotechnisch oder elektrisch, zerstörbar ist.

5. Schieber nach einem der Ansprüche 1 bis 4, dadurch gekennzeichnet, daß seine Einlaßöffnung (2) mit einem Speicher für Druckbeaufschlagtes Feuerlöschfluid und seine Auslaßöffnung mit einem Verteilerkreislauf in Verbindung steht, während die Auslösevorrichtung (18) durch eine Brandspürvorrichtung gesteuert wird.